# EUROPEAN PATENT APPLICATION

(11) **EP 4 588 701 A1**
(43) Date of publication of application: **23.07.2025**
(21) Application number: 25152054.0
(22) Date of filing: 15.01.2025
(51) Int. Cl.: B60K 1/04, B60R 16/023

(54) **ELECTRIC WORK VEHICLE**

(30) Priority: 19.01.2024 JP 2024007076
(71) Applicant: TOYOTA JIDOSHA KABUSHIKI KAISHA, Aichi-ken 471-8571 (JP); Yanmar Holdings Co., Ltd., Osaka-shi, Osaka, 530-0013 (JP)
(72) Inventor: MATSUMOTO, Masashi, Toyota-shi, 471-8571 (JP); IWAMOTO, Hirotsugu, Toyota-shi, 471-8571 (JP); MAKINO, Akihiro, Toyota-shi, 471-8571 (JP); DAIYAKUJI, Taihei, Naka-Ku, 428 Enami (JP); HASHIMOTO, Yusuke, Naka-Ku, 428 Enami (JP)
(74) Representative: D Young & Co LLP

(57) **Abstract**

An electric work vehicle (10) includes: (a) at least one electric motor (MG,MGc,MGt,MGw); (b) a running vehicle-body portion (20); (c) a power transmission portion (30) which is attached to the running vehicle-body portion (20) and which is configured to transmit a power of the at least one electric motor (MG,MGc,MGt,MGw); (d) a battery (40); (e) an electric-power control device (PCU) configured to control an electric power that is to be transferred between the battery (40) and the at least one electric motor (MG, MGc, MGt, MGw); (f) electric equipment (50,52,54,56,58,ECU); and (g) a housing (60) which is provided above the running vehicle-body portion (20) in a vertical direction of the electric work vehicle (10) and which houses the electric equipment (50,52,54,56,58,ECU). The electric-power control device (PCU) and each of the at least one electric motor (MG,MGc,MGt,MGw) are provided outside the housing (60), and are connected through a high-voltage cable (80,80a,80b,80c,80d,80e,80f) through which the electric power is to be transmitted.

## Description

### FIELD OF THE INVENTION

The present invention relates to an electric work vehicle provided with an electric-power control device that is configured to control an electric power supplied to an electric motor.

### BACKGROUND OF THE INVENTION

There is well known an electric work vehicle that includes (a) at least one electric motor, (b) a running vehicle-body portion, (c) a power transmission portion which is attached to the running vehicle-body portion and which is configured to transmit a power of the at least one electric motor, (d) a battery and (e) an electric-power control device configured to control an electric power that is to be transferred between the battery and the at least one electric motor. For example, JP 2023-66726 A discloses an electric tractor as such an electric work vehicle.

### SUMMARY OF THE INVENTION

By the way, where electric equipment is provided in the electric work vehicle, it might be possible to store the electric equipment in a housing, for example. This electric equipment is protected from water by being housed in the housing. In this case, the housing is sealed to make it waterproof, so that a structure such as cables and connectors to connect inside and outside of the housing, and holes and grommets to communicate the inside and outside of the housing are required. On the other hand, the electric motor is mechanically connected to the power transmission portion to transmit a power to the power transmission portion and the running vehicle-body portion, so that the electric motor is disposed outside the housing. Therefore, if the electric-power control device is housed in the housing, a structure is required to pass the cables to connect the electric motor and the electric-power control device from the inside to the outside of the housing while maintaining the waterproof performance. Where the electric motor and the electric-power control device are connected through high-voltage cables, which are thicker and more rigid than low-voltage cables, there is a risk that the structure for passing the cables through the housing would become larger.

The present invention was made in view of the background art described above. It is therefore an object of the present invention to provide an electric work vehicle in which an electric motor and an electric-power control device can be connected to each other through an arrangement that does not increase a size of a housing.

The object indicated above is achieved by the present invention.

The present invention provides an electric work vehicle including: (a) at least one electric motor; (b) a running vehicle-body portion; (c) a power transmission portion which is attached to the running vehicle-body portion and which is configured to transmit a power of the at least one electric motor; (d) a battery; (e) an electric-power control device configured to control an electric power that is to be transferred between the battery and the at least one electric motor; (f) electric equipment; and (g) a housing which is provided above the running vehicle-body portion in a vertical direction of the electric work vehicle and which houses the electric equipment. The electric-power control device and each of the at least one electric motor are provided outside the housing, and are connected through a high-voltage cable through which the electric power is to be transmitted.

In the electric work vehicle according to the present invention, the housing is provided above the running vehicle-body portion in the vertical direction, and houses the electric equipment. The electric-power control device and each of the at least one electric motor are provided outside the housing, and are connected through the high-voltage cable through which the electric power is to be transmitted. Thus, the electric equipment is protected from water by being housed in the housing. Further, the electric-power control device and each of the at least one electric motor, which are provided outside the housing, can be connected directly to each other through the high-voltage cable that does not need to penetrate the housing. Thus, the at least one electric motor and the electric-power control device can be connected to each other without increasing a size of a housing.

### BRIEF DESCRIPTION OF THE DRAWINGS

FIGS. 1A and 1B are a set of views schematically showing a construction of an electric work vehicle to which the present invention is applied;
FIG.2 is a view showing, by way of example, locations of a waterproof box and an electric-power control device;
FIG.3 is a view showing, by way of example, an electrical configuration related to electric equipment and electric motors; and
FIGS.4A, 4B and 4C are a set of views showing, by way of example, panels surrounding a dustproof area.

### DETAILED DESCRIPTION OF PREFERRED EMBODIMENT

Hereinafter, an embodiment of the invention will be described in detail with reference to the accompanying drawings.

### EMBODIMENT

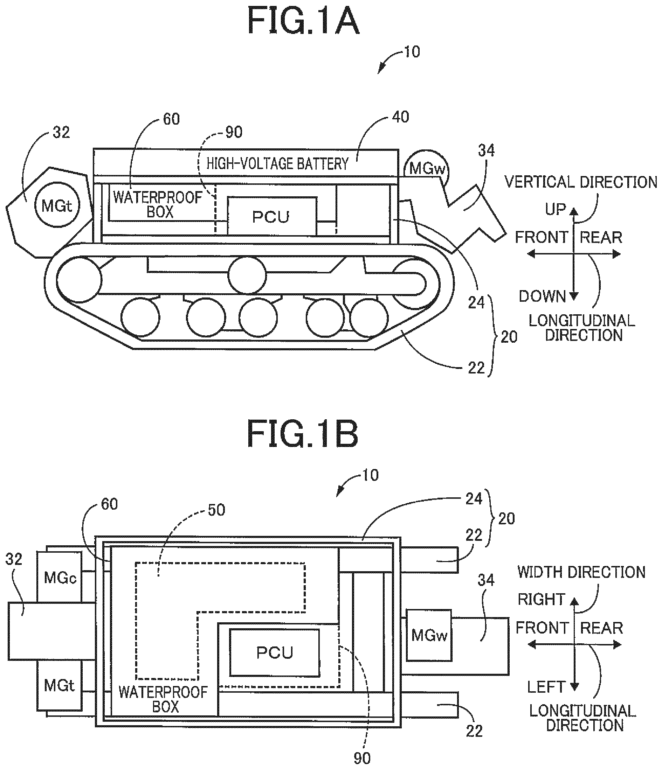

FIGS. 1A and 1B schematically show a construction of an electric tractor 10 as an example of an electric work vehicle to which the present invention is applied. FIG 1A is a left-side view of the electric tractor 10 as seen from a left side of the electric tractor 10. FIG. 1B is an upper view of the electric tractor 10 as seen from an upper side of the electric tractor 10. In FIG. 1B, a high-voltage battery 40 is omitted for convenience.

As shown in FIGS. 1A and 1B, the electric tractor 10 includes a plurality of electric motors MG as at least one electric motor, a runnable running vehicle-body portion 20, a power transmission portion 30, a high-voltage battery 40 and a power control unit PCU as an electric-power control device. The electric tractor 10 is, for example, an agricultural tractor.

The running vehicle-body portion 20 includes a tractor vehicle 22 and a vehicle frame 24. The tractor vehicle 22 is, for example, a known crawler capable of running in an agricultural field. The vehicle frame 24 is a chassis fixed to the tractor vehicle 22. The electric tractor 10 is, for example, a full crawler tractor.

The power transmission portion 30 is attached to the running vehicle-body portion 20, and includes a running/turning transmission 32 and a working transmission 34. The electric motors MG include a running electric motor MGc, a turning electric motor MGt and a working electric motor MGw.

Each of the running electric motor MGc and the turning electric motor MGt is connected to the running/turning transmission 32 in a power transmittable manner. The running/turning transmission 32 is connected to the tractor vehicle 22 in a power transmittable manner. The running/turning transmission 32 is configured to transmit a power of the running electric motor MGc and a power of the turning electric motor MGt, to the tractor vehicle 22.

The working electric motor MGw is connected to the working transmission 34 in a power transmittable manner. The working transmission 34 is attached to the vehicle frame 24, and is provided with working equipment, as needed, such as tiller, plow, fertilizer applicator, grass cutter, seeder, etc. The working transmission 34 is configured to transmit the power of the working electric motor MGw, to the working equipment.

The high-voltage battery 40 is a chargeable and dischargeable DC power source, and is a known secondary battery such as a nickel-metal hydride secondary battery and a lithium-ion battery. The high-voltage battery 40 is a battery configure to supply power to the electric motors MG The power control unit PCU is a device configured to control the power transferred between the high-voltage battery 40 and the electric motors MG

The electric tractor 10 further includes electric equipment 50 and a waterproof box 60 that stores the electric equipment 50. The electric equipment 50 should be protected from water. The waterproof box 60 is a housing disposed above the running vehicle-body portion 20, particularly, the running vehicle-body portion 20, in a vertical direction of the electric tractor 10. The waterproof box 60 has a waterproof performance.

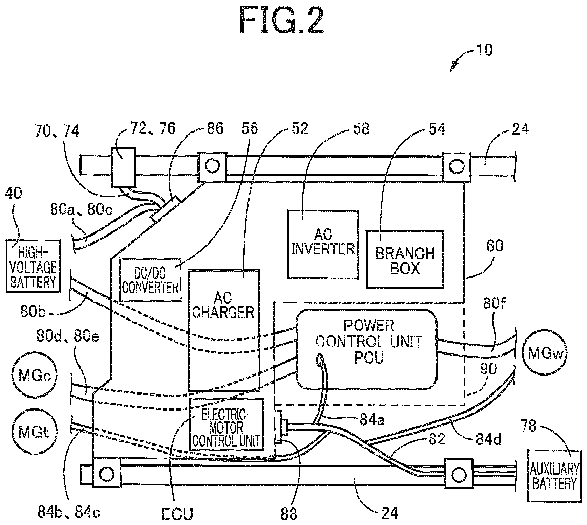

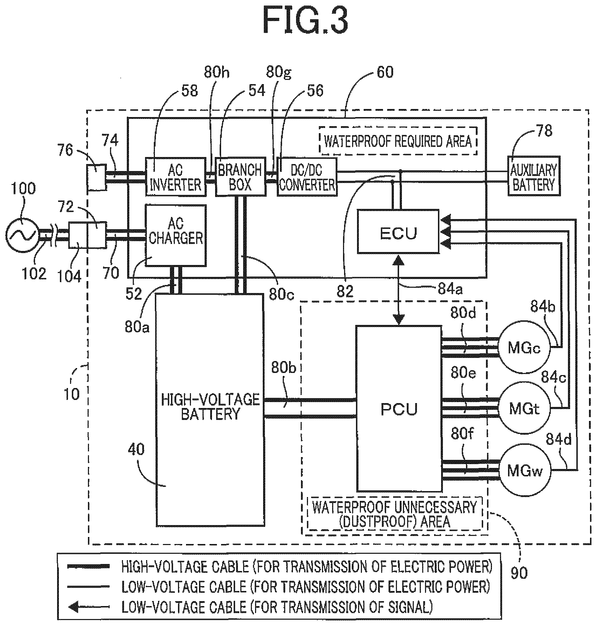

FIG.2 is a view showing, by way of example, locations of the waterproof box 60 and the power control unit PCU. FIG.3 is a view showing, by way of example, an electrical configuration related to the electric equipment 50 and the electric motors MG

In FIGS.2 and 3, the electric equipment 50 includes electric or electronic equipment excluding electric equipment such as the electric motors MG serving as power sources. For example, the electric equipment 50 includes an AC charger 52, a branch box 54, a DC/DC converter 56, an AC inverter 58 and an electric-motor control unit ECU. The electric tractor 10 further includes a charging cable 70, a charging inlet 72, a power supply cable 74, a power supply outlet 76, an auxiliary battery 78, high-voltage-power transmission cables 80, low-voltage power transmission cables 82 and low-voltage transmission cables 84. The high-voltage-power transmission cables 80 are various types of high-voltage cables through each of which an electric power is to be transmitted. The low-voltage-power transmission cables 82 are various types of low-voltage cables through each of which the electric power is to be transmitted. The low-voltage transmission cables 84 are various types of low-voltage transmission cables through each of which a signal is to be transmitted.

The high-voltage battery 40 are connected to the AC charger 52, the power control unit PCU and the branch box 54 through the high-voltage-power transmission cables 80. The high-voltage-power transmission cables 80 include high-voltage cables 80a, 80b and 80c. The high-voltage cable 80a is a cable connecting between the high-voltage battery 40 and the AC charger 52. The high-voltage cable 80b is a cable connecting between the high-voltage battery 40 and the power control unit PCU. The high-voltage cable 80c is a cable connecting between the high-voltage battery 40 and the branch box 54.

The AC charger 52 is connected to the charging inlet 72 through the charging cable 70. The charging inlet 72 is provided on the vehicle frame 24 so as to be connectable to a charging connector 104 of an external charging cable 102 connected to an external power source 100, which is an external power source for the electric tractor 10. The charging inlet 72, which is to be connected to the charging connector 104, is a terminal for inputting the electric power supplied from the external power source 100, and is a charging port to be connected to the external power source 100. The charging cable 70 is also a kind of high-voltage cable.

The AC charger 52 is a charger configured to charge the high-voltage battery 40 with the electric power supplied from the external power source 100. The AC charger 52 is configured to convert an AC current supplied from the external power source 100 into a DC current, and to boost a voltage of the external power source 100 to a voltage equivalent to that of the high-voltage battery 40 so as to charge the high-voltage battery 40.

The stored electric power is supplied from the high-voltage battery 40 to the electric motors MG through the power control unit PCU, for example. When the charging connector 104 connected to the external power source 100 is connected to the charging inlet 72, the electric power from the external power source 100 is supplied to the high-voltage battery 40 through the AC charger 52, for example. The electric tractor 10 is a tractor capable of charging the high-voltage battery 40 with the electric power from the external power source 100. The high-voltage battery 40 is a battery for driving the electric tractor 10.

The power control unit PCU is connected to the electric motors MG through the high-voltage-power transmission cables 80. The high-voltage-power transmission cables 80 include high-voltage cables 80d, 80e and 80f. The high-voltage cable 80d is a cable connecting between the power control unit PCU and the running electric motor MGc. The high-voltage cable 80e is a cable connecting between the power control unit PCU and the turning electric motor MGt. The high-voltage cable 80f is a cable connecting between the power control unit PCU and the working electric motor MGw.

The power control unit PCU is equipped with an inverter that includes witching elements. The power control unit PCU is configured to convert a direct current from the high-voltage battery 40, into an alternating current so as to drive each of the electric motors MG The power control unit PCU may also be equipped with a boost converter configured to boost the voltage of the high-voltage battery 40 and supply the boosted voltage to the inverter, depending on the voltage of the high-voltage battery 40.

The branch box 54 is connected to the DC/DC converter 56 and the AC inverter 58 through the high-voltage-power transmission cables 80. The high-voltage-power transmission cables 80 includes high-voltage cables 80g and 80h. The high-voltage cable 80g is a cable connecting between the branch box 54 and the DC/DC converter 56. The high-voltage cable 80h is a cable connecting between the branch box 54 and the AC inverter 58.

The branch box 54 is configured to supply the power from the high-voltage battery 40, to the DC/DC converter 56 and the AC inverter 58. That is, the DC/DC converter 56 and the AC inverter 58 are connected to the high-voltage battery 40 through the branch box 54.

The DC/DC converter 56 is connected to the auxiliary battery 78 and the electric-motor control unit ECU through the low-voltage-power transmission cables 82. The DC/DC converter 56 functions as a charging device configured to reduce the voltage of the high-voltage battery 40 to a voltage equivalent to that of the auxiliary battery 78 and to charge the auxiliary battery 78. The DC/DC converter 56 and/or the auxiliary battery 78 is configured to supply the electric power to operate the auxiliary equipment and the electric-motor control unit ECU provided in the electric tractor 10.

The AC inverter 58 is connected to the power supply outlet 76 through the power supply cable 74. The AC inverter 58 is configured to convert the direct current supplied from the high-voltage battery 40, into the alternating current, and also to reduce the voltage of the high-voltage battery 40 to a voltage equivalent to that of the external power source 100, for example. The power supply outlet 76 is provided on the vehicle frame 24 such that a plug of external electric equipment of the electric tractor 10 can be connected to the power supply outlet 76. The power supply outlet 76 is a terminal for supplying the electric power to the external electric equipment of the electric tractor 10, and is a power supply port that is to be connected to the external electric equipment. The power supply cable 74 is also a kind of high-voltage cable.

The electric-motor control unit ECU is connected to the power control unit PCU and the electric motors MG through the low-voltage transmission cables 84. The low-voltage transmission cables 84 include low-voltage cables 84a, 84b, 84c and 84d. The low-voltage cable 84a is a cable connecting between the electric-motor control unit ECU and the power control unit PCU. The low-voltage cable 84b is a cable connecting between the electric-motor control unit ECU and the running electric motor MGc. The low-voltage cable 84c is a cable connecting between the electric-motor control unit ECU and the turning electric motor MGt. The low-voltage cable 84d is a cable connecting between the electric-motor control unit ECU and the working electric motor MGw.

The electric-motor control unit ECU is an electronic control device configured to output a command signal to the power control unit PCU through the low-voltage cable 84a to drive the power control unit PCU. For example, the electric-motor control unit ECU outputs the command signal to drive the electric motors MG based on an output request value corresponding to a request made by an operator. The electric-motor control unit ECU receives detection signals indicative of rotational speed values and temperature values of the electric motors MG, wherein the detection signals are supplied to the electric-motor control unit ECU from various sensors provided in the electric motors MG through the low-voltage cables 84b, 84c and 84d.

The electric tractor 10 is equipped with the electric equipment 50 such as the AC charger 52, branch box 54, DC/DC converter 56, AC inverter 58 and electric-motor control unit ECU. Therefore, the waterproof box 60 is provided in the electric tractor 10, and the electric equipment 50 is protected from water by being housed the waterproof box 60. On the other hand, the electric motors MG, which are prime movers of the electric tractor 10, are mechanically connected to the power transmission portion 30 so as to transmit the power to the power transmission portion 30 and the tractor vehicle 22. Therefore, the electric motors MG are disposed outside the waterproof box 60. Further, the electric motors MG are connected to the power control unit PCU through the high-voltage cables 80d, 80e and 80f of the the high-voltage-power transmission cables 80, so as to receive the electric power. The high-voltage-power transmission cables 80 have a thicker wire diameter and a higher rigidity than the low-voltage cables 82 and the low-voltage transmission cables 84. In addition, connectors or terminal blocks used for the high-voltage-power transmission cables 80 are larger than those used for the low-voltage cables 82 and the low-voltage transmission cables 84.

Since the waterproof box 60 is sealed to make it waterproof, it is necessary to arrange the cables and connectors to connect inside and outside of the waterproof box 60, and to have holes and grommets to communicate the inside and outside of the waterproof box 60. Therefore, if the power control unit PCU is housed inside the waterproof box 60, it is necessary to provide and arrange large grommets through which the high-voltage cables 80d, 80e, 80f and large terminal blocks can pass from the inside to the outside of the waterproof box 60 while maintaining the waterproof performance of the waterproof box 60. This may result in a risk that the structure required to penetrate the waterproof box 60 will become larger.

Therefore, in order to connect the electric motors MG and the power control unit PCU while suppressing the size of the waterproof box 60, the power control unit PCU as well as the electric motors MG is disposed outside the waterproof box 60 (see FIGS. 1-3). In the electric tractor 10, the inside of the waterproof box 60 is a waterproof required area (= water-protection required area) that requires the waterproof performance. The electric tractor 10 is provided with a waterproof unnecessary (dustproof) area that does not require waterproofing but has a dustproof performance. In the present embodiment, the waterproof unnecessary (dustproof) area is called a dustproof area 90. The dustproof area 90 is provided above the running vehicle-body portion 20, particularly, the tractor vehicle 22 in a vertical direction of the electric tractor 10, and is located adjacent to the waterproof box 60 a horizontal direction of the electric tractor 10. The power control unit PCU has a simple waterproof function on its own, and is located in dustproof area 90. The high-voltage battery 40 also has a simple waterproof function on its own, and is also located in dustproof area 90.

Referring to FIG.2, among the high-voltage cables, the charging cable 70, power supply cable 74 and high-voltage cable 80a (and 80c) are in communication with the inside and outside of the waterproof box 60 through a high-voltage grommet 86. Among the high-voltage cables, the high-voltage cables 80b, 80d, 80e and 80f are routed outside waterproof box 60. Among the high-voltage cables, the high voltage cables 80b, 80d, 80e and 80f are routed outside the waterproof box 60. The low-voltage power transmission cables 82 and the low-voltage transmission cables 84 are in communication with the inside and outside of the waterproof box 60 through a low-voltage grommet 88.

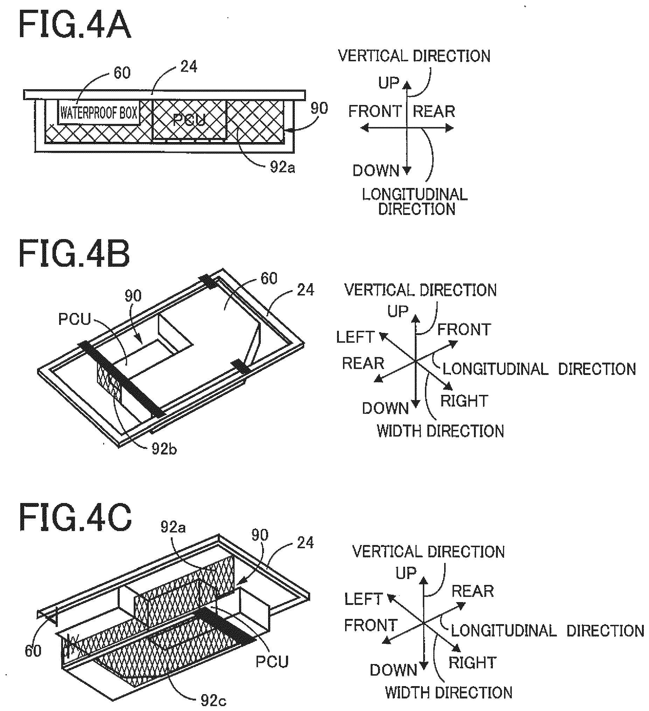

FIGS.4A, 4B and 4C are a set of views showing, by way of example, panels 92 surrounding the dustproof area 90. FIG.4A is a side view as seen from a left-side of the electric tractor 10. FIG.4B is a perspective view as seen from an upper right rear side of the electric tractor 10. FIG.4C is a perspective view as seen from a lower left rear side of the electric tractor 10.

As shown in FIGS.4A, 4B and 4C, the electric tractor 10 includes panels 92 that are provided to surround the dustproof area 90. The panels 92 include a side panel 92a, a rear panel 92b, and an under panel 92c (see shaded areas). The side panel 92a is located on a left side of the dustproof area 90 in the horizontal direction. The rear panel 92b is located on a rear side of the dustproof area 90 in the horizontal direction. The under panel 92c is located below the dustproof area 90 in the vertical direction. The dustproof area 90 is surrounded on its right and front sides by the waterproof box 60 (see FIG4B). The side panel 92a and the rear panel 92b are arranged around the dustproof area 90 except on side of the waterproof box 60 in the horizontal direction (see FIGS.4B and 4C). The under panel 92c is located below the dustproof area 90 in the vertical direction (see FIG4C). The high-voltage battery 40 is located above and adjacent to the power control unit PCU in the vertical direction (see FIG. 1). Therefore, the dustproof area 90 is covered on its upper side by the high-voltage battery 40. The dustproof area 90 is surrounded by the panels 92, the waterproof box 60 and the high-voltage battery 40.

As described above, in the present embodiment, the waterproof box 60 is provided above the running vehicle-body portion 20 in the vertical direction, and houses the electric equipment 50. The power control unit PCU and the electric motors MG are provided outside the waterproof box 60, and are connected through the high-voltage cables 80d, 80e and 80f through each of which the electric power is to be transmitted. Thus, the electric equipment 50 is protected from water by being housed in the waterproof box 60. Further, the power control unit PCU and the electric motors MG, which are provided outside the waterproof box 60, can be directly connected through the high-voltage cables 80 that do not need to penetrate the waterproof box 60. For example, there is no need to provide large-sized grommets to penetrate the waterproof box 60. Thus, each of the electric motors MG and the power control unit PCU can be connected to each other without increasing a size of the waterproof box 60.

In the present embodiment, the power control unit PCU is provided above the running vehicle-body portion 20 in the vertical direction, and is located adjacent to the waterproof box 60 in the horizontal direction. Thus, it is possible to reduce a required length of each of the cables connecting between the power control unit PCU and the inside of the waterproof box 60. Further, the dustproof area 90 is provided above the running vehicle-body portion 20 in the vertical direction, and is located adjacent to the waterproof box 60 in the horizontal direction. The power control unit PCU is located in the dustproof area 90. Thus, it is possible to ensure a dustproof performance of the power control unit PCU.

In the present embodiment, the high-voltage battery 40 is located adjacent to and above the power control unit PCU in the vertical direction. The under panel 92c is located below the dustproof area 90 in the vertical direction. The side panel 92a and the rear panel 92b are located around the dustproof area 90 except on side of the waterproof box 60 in the horizontal direction. Thus, it is possible to prevent the dustproof area 90 (non-waterproof area) in which the power control unit PCU is located, from being hit directly by mud, water, flying stones, etc.

In the present embodiment, the electric-motor control unit ECU, which is housed in the waterproof box 60, is connected to each of the power control unit PCU and the electric motors MG through the low-voltage cable 84 through which the signal is to be transmitted. Thus, the electric-motor control unit ECU is reliably protected from water by being housed in the dustproof area 90. Further, it is possible to connect the electric-motor control unit ECU to each of the power control unit PCU and the electric motors MG, by providing the small-sized low-voltage grommet 88 to penetrate the waterproof box 60.

While the preferred embodiment of this invention has been described in detail by reference to the drawings, it is to be understood that the invention may be otherwise embodied.

For example, in the above-described embodiment, the electric tractor 10 is constituted by a full crawler tractor by way of example. However, the electric tractor 10 may be constituted by a half crawler tractor, a wheel tractor, etc.

In the above-described embodiment, the at least one electric motor is constituted by the electric motors MG including the running electric motor MGc, turning electric motor MGt and working electric motor MGw, by way of example. However, the at least one electric motor may be constituted by a single electric motor. In this case, for example, the single electric motor may be provided to be connected to the working transmission 34 in a power transmittable manner, and an engine as a power source may be provided to be connected to the running/turning transmission 32 in a power transmittable manner. That is, the electric work vehicle according to the present invention may be any tractor, as long as the tractor includes at least one electric motor as a power source.

It is to be understood that the embodiment described above is given for illustrative purpose only, and that the present invention may be embodied with various modifications and improvements which may occur to those skilled in the art.

### NOMENCLATURE OF ELEMENTS

10: electric tractor (electric work vehicle)
20: running vehicle-body portion
30: power transmission portion
40: high-voltage battery (battery)
50: electric equipment
60: waterproof box (housing)
80: high-voltage-power transmission cable
   (high-voltage cable through which electric power is to be transmitted)
84: low-voltage transmission cable
   (low-voltage cable through which signal is to be transmitted)
90: dustproof area (dustproof area)
92: panels
92a: side panel (panel)
92b: rear panel (panel)
92c: under panel (panel)
ECU: electric-motor control unit (electronic control device)
MG: electric motors (at least one electric motor)
PCU: power control unit (electric-power control device)

## Claims

1. An electric work vehicle (10) comprising:
at least one electric motor (MG,MGc,MGt,MGw);
a running vehicle-body portion (20);
a power transmission portion (30) which is attached to the running vehicle-body portion (20) and which is configured to transmit a power of the at least one electric motor (MG,MGc,MGt,MGw);
a battery (40);
an electric-power control device (PCU) configured to control an electric power that is to be transferred between the battery (40) and the at least one electric motor (MG, MGc, MGt, MGw);
electric equipment (50,52,54,56,58,ECU); and
a housing (60) which is provided above the running vehicle-body portion (20) in a vertical direction of the electric work vehicle (10) and which houses the electric equipment (50,52,54,56,58,ECU);
wherein the electric-power control device (PCU) and each of the at least one electric motor (MG,MGc,MGt,MGw) are provided outside the housing (60), and are connected through a high-voltage cable (80,80a,80b,80c,80d,80e,80f) through which the electric power is to be transmitted.

2. The electric work vehicle (10) according to claim 1,
wherein the electric-power control device (PCU) is provided above the running vehicle-body portion (20) in the vertical direction, and is located adjacent to the housing (60) in a horizontal direction of the electric work vehicle (10).

3. The electric work vehicle (10) according to claim 2, further comprising:
a dustproof area (90) which is provided above the running vehicle-body portion (20) in the vertical direction and which is located adjacent to the housing (60) in the horizontal direction; and
panels (92,92a,92b,92c) provided below the dustproof area (90) in the vertical direction and around the dustproof area (90) except on side of the housing (60) in the horizontal direction,
wherein the electric-power control device (PCU) is located in the dustproof area (90), and
wherein the battery (40) is located adjacent to and above the electric-power control device (PCU) in the vertical direction.

4. The electric work vehicle (10) according to claim 1,
wherein the electric equipment (50,52,54,56,58,ECU) includes an electronic control device (ECU) that is configured to drive the electric-power control device (PCU),
wherein the electronic control device (ECU) is connected to each of the electric-power control device (PCU) and the at least one electric motor (MG,MGc,MGt,MGw) through a low-voltage cable (84,84a,84b,84c,84d) through which a signal is to be transmitted.
